# DEMANDE DE BREVET EUROPEEN

(11) **EP 0 756 819 A1**
(43) Date de publication de la demande: **05.02.1997**
(21) Numéro de dépôt: 95111979.1
(22) Date de dépôt: 30.07.1995
(51) Int. Cl.: A01M 23/18, A01M 23/08

(54) **Piège pour taupes**

(71) Demandeur: Dani, Arturo, I-36100 Vicenza (IT)
(72) Inventeur: Dani, Arturo, I-36100 Vicenza (IT)
(74) Mandataire: Bettello, Luigi, Dott. Ing.

(57) **Abrégé**

Il est constitué par un corps tubulaire (1) réalisé d'une seule pièce munie à ses têtes d'encastrements dans lesquels viennent s'insérer des plaquettes (9) qui retiennent des trappes basculantes (2, 3). Celles-ci sont réalisées de manière à pouvoir s'ouvrir lorsque la taupe pénètre dans le corps (1) mais ne peuvent basculer en un sens inverse. Elles maintiennent donc la taupe emprisonnée dans le corps (1) sant la tuer, jusqu'à ce que l'opérateur intervienne.

## Description

La présente invention a pour objet un piège particulièrement adapté pour la prise de taupes vivantes.

Ainsi qu'il est connu, la taupe est un animal aussi répandu dans les terres agricoles que dans les jardins, où habituellement il creuse dans le sol des tanières de type tubulaire, fréquemment visibles à l'extérieur par un léger soulèvement de la surface du terrain.

Ces animaux sont dans une certaine mesure nuisibles pour les cultures, aussi bien de plantes que de fleurs, de sorte qu'ils sont combattus par l'homme, le plus souvent moyennant l'utilisation de pièges à déclenchement qui, généralement, entraînent leur mort.

L'invention vise au contraire à capturer les taupes vivantes et elle a pour objet le piège qui est défini à la revendication 1 et aux revendications subséquentes.

Le piège suivant l'invention est de forme tubulaire et la taupe peut entrer aussi bien par une extrémité que par l'autre, en faisant tourner la trappe qui ferme l'issue de façon irréversible, ce qui permet d'emprisonner la taupe dans le corps tubulaire, en l'empêchant de sortir de ce corps et sans lui infliger de dommages physiologiques ni la mort comme dans le cas des pièges pour taupes qui sont utilisés à ce jour.

Les taupes ainsi emprisonnées peuvent ensuite soit être relâchées en des lieux où elles ne risquent pas de provoquer de dommages, soit être supprimées par des moyens indolores.

L'invention sera décrite ci-après avec plus de détails en regard du dessin annexé dans lequel :
Fig. 1 est une vue de côté, avec coupe partielle, du piège à taupes selon l'invention.
Fig. 2 est une vue de côté montrant l'une des plaquettes pour le montage de la trappe placée à chaque extrémité du corps tubulaire.
Fig. 3 en est une vue par l'avant.
Fig. 4 est la vue par dessus correspondante.
Fig. 5 est la vue frontale d'une trappe.
Fig. 6 en est une vue de côté.
Fig. 7 est la vue par dessus correspondante.

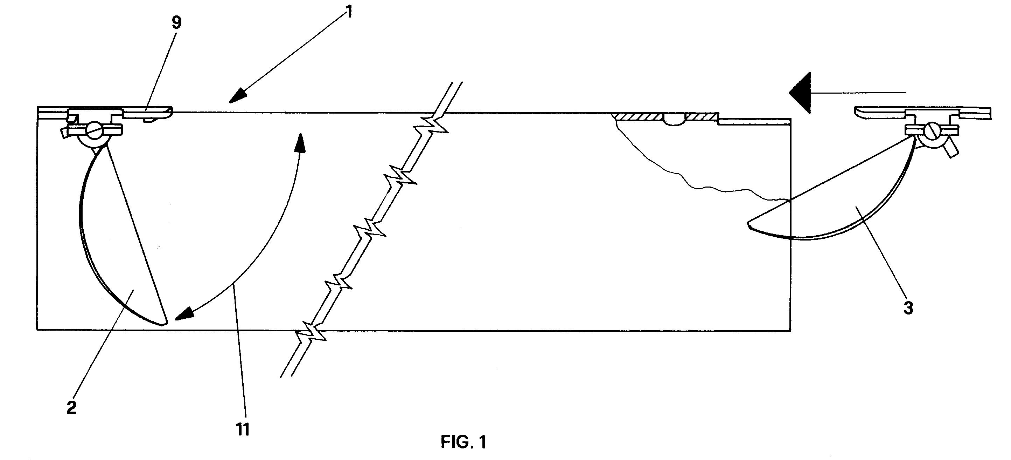

Comme on peut le voir en fig. 1, le piège à taupes selon l'invention comprend une pièce tubulaire 1, ouverte à ses deux extrémités et réalisée de préférence sous la forme d'un corps cylindrique unique en matière transparente et inodore ; ce corps est équipé à ses extrémités de deux trappes 2 et 3, qui peuvent s'ouvrir uniquement vers l'intérieur, tout basculement vers l'extérieur étant interdit, de sorte qu'une fois que la taupe est entrée dans le corps cylindrique 1, elle ne peut plus en sortir.

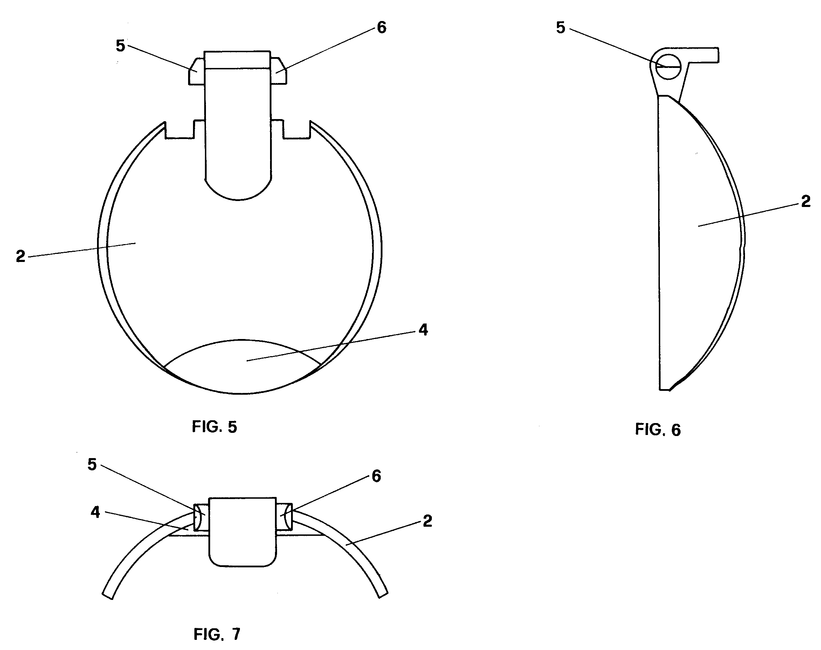

Les trappes 2 et 3 sont de préférence formées par deux calottes hémisphériques, mieux visibles en fig. 5, 6 et 7, avec une partie renflée 4 à l'extrémité inférieure pour faciliter la fermeture de la trappe lorsque la taupe est entrée.

Les trappes 2 et 3 sont équipées de tourillons 5 et 6 qui s'engagent dans des pattes perforées 7 et 8 faisant saillie sur des plaquettes 9, destinées à s'insérer aux extrémités du corps tubulaire 1, lequel est avantageusement muni d'ouvertures rectangulaires et d'un trou circulaire dans lequel pénètre une protubérance 10 qui fait saillie vers l'intérieur sur chaque plaquette 9.

On comprend que les deux trappes de fermeture 2 et 3 ne peuvent tourner à l'intérieur du corps cylindrique que jusqu'à atteindre la position visible sur la fig. 1.

Il est donc évident que les deux trappes de fermeture 2 et 3 peuvent par contre s'ouvrir en tournant dans le sens de la flèche 11 sous la poussée de la taupe qui cherche à pénétrer dans le corps tubulaire 1, puis se refermer en pivotant dans le sens inverse de la même double flèche 11, en empêchant ainsi la taupe de sortir du corps tubulaire 1.

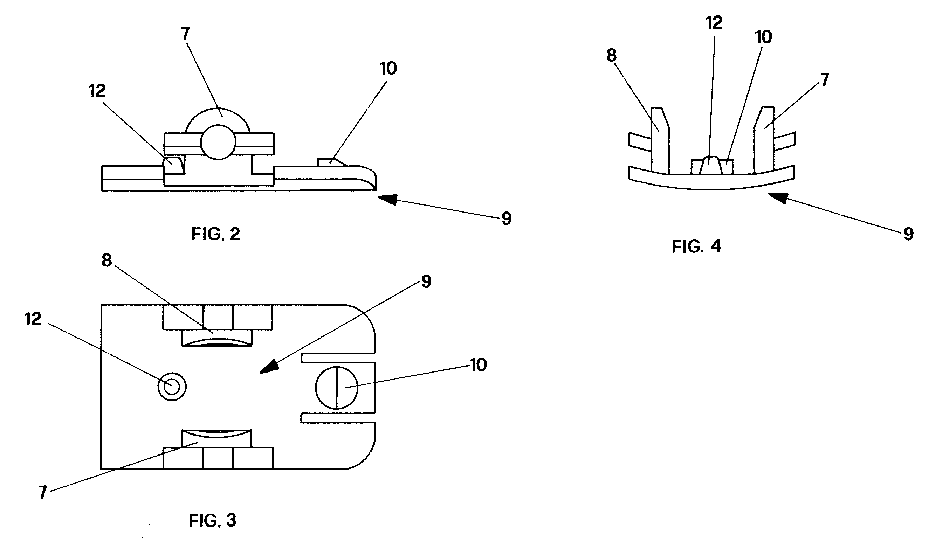

On remarquera en fig. 3 et 4 que les tourillons 5 et 6 des trappes de fermeture 2 et 3 pénètrent dans des trous pratiqués dans les pattes 7 et 8 des plaquettes 9 par simple déformation élastique de ces dernières, puisqu'il s' agit de pièces réalisées en une matière plastique élastique, en restant ensuite solidement retenues sur les plaquettes.

La protubérance 12 qui fait saillie vers l'extérieur sur la plaquette 9, crée une butée contre laquelle les trappes de fermeture 2 et 3 viennent s'arrêter, en étant ainsi limités de façon à ne pas pouvoir basculer vers l'extérieur.

On conçoit sans peine que l'utilisateur peut monter lui-même les trappes de fermeture 2 et 3, l'utilisateur recevant les pièces détachées du piège dans une boite de montre avec les instructions nécessaires, ce qui facilite la distribution commerciale des pièges dans les magasins spécialisés, les supermarchés et autres.

## Revendications

1. Piège pour taupes, caractérisé en ce qu'il est constitué par un corps tubulaire (1) muni de trappes de fermeture (2 et 3) qui, peuvent pivoter sur des tourillons (5 et 6) et qui en tout état de co'use ne peuvent pas franchir une limite donnée, de sorte qu'ils peuvent seulement s'ouvrir en tournant dans un sens mais ne peuvent pas tourner dans le sens opposé, en permettant ainsi aux taupes de pénétrer dans le corps tubulaire (1) sans pouvoir en sortir.

2. Piège selon la revendication 1, caractérisé en ce que le corps tubulaire (1) est réalisé sous la forme d'une pièce unique de forme cylindrique présentant à chaque extrémité des encoches rectangulaires et un trou dans lesquels on insère une plaquette (9) muni d'un ergot (10) dirigé vers l'intérieur et de pattes perforées (7 et 8) dans lesquelles pénètrent les tourillons (5 et 6) qui font saillie sur la pariie supérieure de la trappe correspondante (2 ou 3).

3. Piège selon les revendications 1 et 2, caractérisé en ce que des renflements d'extrémité (4) sont prévus dans la partie inférieure des trappes (2, 3) en facilitant ainsi la fermeture de celles-ci sous l'effet de leur propre poids.

4. Piège selon les revendications 1 à 3, caractérisé en ce que chaque plaquette (9) comporte une protubérance (12) qui fait saillie vers l'intérieur en définissant ainsi une butée contre laquelle les trappes de fermeture (2 et 3) viennent porter, de sorte qu'elles sont arrêtées sans pouvoir basculer vers l'extérieur.
